# EUROPÄISCHE PATENTSCHRIFT

(11) **EP 1 347 099 B1**
(45) Veröffentlichungstag und Bekanntmachung des Hinweises auf die Patenterteilung: **14.11.2007**
(21) Anmeldenummer: 03004938.1
(22) Anmeldetag: 10.03.2003
(51) Int. Cl.: E01F 9/04, E01F 9/08

(54) **Verfahren und Vorrichtung zur Herstellung von Reflexkörpern für Horizontalmarkierungen**
Method and device for producing reflex reflectors for horizontal markings
Méthode et appareillage pour la production de corps réfléchissants pour marquage horizontal

(30) Priorität: 18.03.2002 CH 4642002
(43) Veröffentlichungstag der Anmeldung: 24.09.2003
(73) Patentinhaber: Bollag, Moses, CH-1206 Geneve (CH); SWARCO VESTGLAS Vestische Strahl- und Reflexglas GmbH, D-45659 Recklinghausen (DE)
(72) Erfinder: Bollag, Moses, 1206 Genf (CH)
(74) Vertreter: Bugnion Genève

(56) Entgegenhaltungen:
- EP-A- 0 280 102
- EP-A- 0 565 765
- WO-A-99/04099
- US-A- 3 043 196
- US-A- 4 415 603
- US-A- 4 983 458
- US-A- 5 897 914

## Beschreibung

Die Erfindung bezieht sich auf ein Verfahren und auf eine Vorrichtung zur Herstellung von Reflexkörpern, die dazu bestimmt sind, auf Horizontalmarkierungen von Verkehrsflächen oder Verkehrsleitflächen, insbesondere auf Begrenzungs- und Leitlinien zur Kennzeichnung von Fahrbahnen, aufgebracht zu werden, sowie auf einen nach diesem Verfahren hergestellten Reflexkörper.

Die Fachwelt ist seit langem bemüht, eines der wichtigsten Probleme der Verkehrssicherheit zu lösen, nämlich eine Verbesserung der Nachtsichtbarkeit von Horizontalmarkierungen im Scheinwerferlicht eines Autos, insbesondere bei Regen und Nässe. Dazu wird von der Retroreflexion genannten Eigenschaft von Reflexperlen Gebrauch gemacht. Deren Sichtbarkeit im Scheinwerferlicht eines Autos beruht nicht so sehr auf einer spiegelnden Reflexion, sondern vielmehr auf der Retroreflexion, die von Lichtstrahlen erzeugt wird, welche in die Reflexperle eindringen, dabei eine Brechung erfahren und nach innerer Reflexion unter nochmaliger Brechung wieder auf der Einfallsseite der Reflexperle austreten und damit auf die Lichtquelle, also zum Fahrer des Autos hin, zurückgestrahlt werden.

Zur Verbesserung der Sichtbarkeit von Strassenmarkierungen durch Retroreflexion sind bereits handelsübliche sogenannte Hig-Index-Perlen bekannt, die einen hohen Brechungsindex von im allgemeinen 1,91 haben und auf frisch gezogene Markierungslinien aufgestreut werden, wie z.B. in US 4,415,603 beschrieben.

Eine andere Maßnahme wird in WO 93/18233 des gleichen Erfinders vorgeschlagen. Reflexkörper aus durchsichtigem Material werden auf ihrem Umfang teilweise so mitFarbspitzern bedeckt, dass die von Farbe frei bleibende Oberfläche ausreicht, um auftreffendes Licht mit zur Erzeugung einer Retroreflexion hinreichenden Intensität in den Reflexkörper ein- und aus diesem wieder austreten zu lassen. Zur Herstellung derartiger Reflexkörper wurde vorgeschlagen, diese aus einem Behälter herausfallen zu lassen und beim Fallen, nach Art des Sprühturmverfahrens, mit fein verteilter Farbe zu besprühen.

Ferner ist es aus der EP 0 280 102 B1 des gleichen Erfinders bekannt, in eine frisch aufgetragene Farbspur Profilteilchen einzubringen, deren minimale Abmessung größer als die Trockenfilmstärke der Farbspur ist, diese Profilteilchen vollständig mit Farbmasse zu umhüllen, so dass eine Oberflächenprofile aufweisende Markierungslinie entsteht, und dann auf die noch frische Farbspur Reflexperlen aufzustreuen. Dadurch werden die an den Profilen haftenden Reflexperlen besonders gut von den Autoscheinwerfern angeleuchtet und tragen bevorzugt zur Retroreflexion bei. Allerdings unterliegen die Profile einem erhöhten Abrieb durch den darüber rollenden Verkehr.

US 4,983,458 beschreibt tetraederförmige Reflexkörper, welche aus einer Kunststoffmatrize, in die Glasperlen einverleibt sind, bestehen.

Aus der Druckschrift WO99/04099 ist ebenfalls bekannt eine Straßenmarkierung herzustellen, indem auf eine Markierungsgrundschicht thermoplastische Partikel gestreut werden, diese erweicht und mit der Grundschicht verbunden werden, und nach erkalten nacheinander mit Bindemittel und Reflexperlen bestreut werden.

Die Druckschrift US3,043,196 beschreibt ein Herstellungsverfahren von Reflexkörpern in dem Körnchen eines Hartmaterials mit einer aushärtbaren Bindemittellösung vermischt werden, und die Mischung so lang gerührt wird, bis dass das Bindemittel teilweise aushärtet und die Partikel nicht mehr aneinander kleben, jedoch das Bindemittel gerade noch so weich und klebrig ist, dass Reflexperlen an ihm anhaften können. Dann werden versilberte Reflexperlen beigemischt, und das Ganze wird wiederum gerührt. Nach vollständiger Aushärtung wird überschüssiges Silber durch ätzen entfernt.

Die bekannten Massnahmen erfordern zum Teil verhältnismässig aufwendige Arbeiten bei der Herstellung und/oder der Applikation der Reflexkörper, wobei der Effekt der Retroreflexion unter einem Wasserfilm praktisch unwirksam wird

Der Erfindung liegt die Aufgabe zugrunde, Reflexkörper zu schaffen, die die Sichtbarkeit von Horizontalmarkierungen, insbesondere deren Nachtsichtbarkeit bei Regen und Nässe, selbst unter einem Wasserfilm, wesentlich verbessern und welche ohne zusätzliche Einrichtungen, wie z.B. doppelte Farbspritzpistolen und Perlstreuer, auf die Markierungen aufgebracht werden können.

Zur Lösung dieser Aufgabe ist das Verfahren nach der Erfindung durch die im Anspruch 1 angegebenen Merkmale und der Reflexkörper nach der Erfindung durch die im Anspruch 11 angegebenen Merkmale gekennzeichnet.

Die wesentlichen Vorteile der Erfindung bestehen darin, dass die High-Index-Perlen auf dem Umfang der mit Farbe bedeckten Teilchen besonders gut vom Autoscheinwerfer angeleuchtet und zurückreflektiert werden, dass sie unter Verzicht auf kostspielige Dickschicht-Markierungen oder profilierte Markierungen auf üblichen Dünnschicht-Markierungen mittels einfacher Applikationsmethoden verlegt werden können und dass eine Einsparung an Material erreicht wird, da die High-Index-Perlen sozusagen nur punktuell auf den gestreuten Teilchen benötigt werden und nicht als direktes Nachstreumittel. Durch Verwendung der Reflexkörper nach der Erfindung anstelle von bisher bekannten profilierten Markierungen wird also die Verkehrssicherheit bei Nacht und Regen, sogar unter einem Wasserfilm, verbessert, da die auf dem Umfang der Teilchen verteilten High-Index-Perlen auf Grund ihrer unterschiedlichen Lagen auf den Teilchenprofilen günstigere Anstrahlungswinkel bilden und somit das auftreffende Licht wirksamer zurückreflektieren.

Besondere Ausführungsformen des Verfahrens nach der Erfindung ergeben sich aus den Unteransprüchen 2 bis 9.

Besonders vorteilhaft lässt sich das Verfahren wie im Anspruch 2 angegeben in einem einzigen Arbeitsgang durchführen, indem die Teilchen des Granulats aus einem Behälter fallen und während des Fallens zunächst mit Farbmasse und danach mit den High-Index-Perlen besprüht werden.

Als Granulat können beliebige, preiswerte feste Teilchen, insbesondere unregelmässig geformte Mineralteilchen wie Splitt, Kies, Quarz, Bruchglas oder dergleichen oder auch einfache Glasperlen verwendet werden.

Bevorzugt werden ein Granulat aus Teilchen, die einen Durchmesser bzw. eine Maximalabmessung im Bereich 0,5 bis 4 mm, insbesondere 1 bis 3 mm haben, und High-Index-Perlen mit Durchmessern im Bereich von 60 bis 150 µm, insbesondere 80 bis 100 µm, verwendet.

Die Vorrichtung nach der Erfindung ist durch die im Anspruch 10 angegebenen Merkmale gekennzeichnet und erlaubt die einfache und preiswerte Herstellung der erfindungsgemässen Reflexkörper in einem Arbeitsgang.

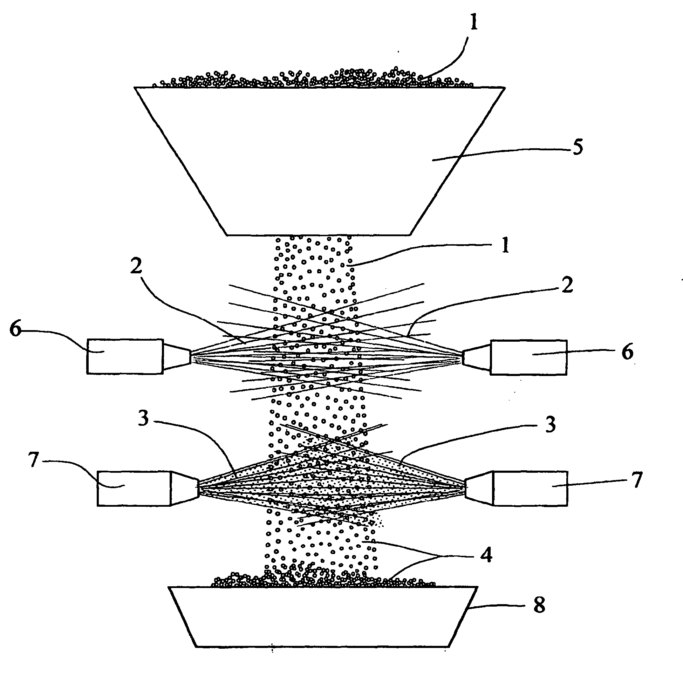

Die Erfindung wird an Hand der Zeichnung an einem Ausführungsbeispiel näher erläutert.

Die einzige Figur zeigt schematisch eine Vorrichtung zum Durchführen des erfindungsgemässen Verfahrens.

Ein Granulat aus harten Teilchen 1 unregelmässiger Gestalt mit Maximalabmessunge von 1 bis 3 mm, zum Beispiel Quarzteilchen, werden in einen trichterförmigen Behälter 5 mit Bodenöffnungen gefüllt, aus denen diese Teilchen 1 herausfallen können. Unterhalb dieses Behälters 5 sind um die Fallstrecke der Teilchen herum verteilte Farbspritzdüsen 6 angeordnet, welche die fallenden Teilchen mit einer flüssigen Farbmasse 2 derart besprühen, dass die gesamte Teilchenoberfläche wenigstens näherungsweise mit einer Farbschicht bedeckt wird, deren Dicke vorzugsweise 100 bis 200 µm beträgt. Bei der Farbmasse kann es sich um gewöhnliche weisse Markierungsfarbe, um Acrylfarbe oder auch eine farbige Farbmasse handeln, die vorzugsweise schnell trocknend ist.

Unterhalb der Farbspritzpistolen 6 sind, wiederum um die Fallstrecke der Teilchen herum verteilt, mehrere Perlpistolen 7 angeordnet, aus denen handelsübliche High-Index-Perlen 3 mit einem hohen Brechungsindex über 1,90, z.B. 1,91, und mit Durchmessern, die wesentlich kleiner als die Abmessungen der erwähnten Teilchen sind, auf die mit frischer Farbe bedeckten Teilchen gespritzt werden. Diese High-Index-Perlen haben vorzugsweise einen Durchmesser von 80 bis 100 um.

Auf diese Weise entstehen Reflexkörper 4 mit einer Oberflächenschicht aus einer Farbmasse, in die teilweise High-Index-Perlen eingebettet sind, welche nach Trocknung oder Aushärtung der Farbmasse fest auf den Teilchen haften. Die so gebildeten Reflexkörper 4 werden in einer Wanne 8 mit einem Sieb als Boden aufgefangen, durch das überschüssige Farbmasse und Reflexperlen hindurchfallen können. Je nach Typ der Farbmasse kann noch eine künstliche Trocknung, z. B. eine UV-Trocknung, der Reflexkörper vorgenommen werden.

Vorzugsweise werden die verwendeten Granulatteilchen und/oder die High-Index-Perlen zuvor noch mit einem handelsüblichen Haftvermittler, einem sogenannten Coating, behandelt, was die Haftung dieser Substanzen bzw. der Farbe auf den Teilchen und der High-Index-Perlen auf der Farboberfläche, verbessert. In diesem Falle sind also die zur Herstellung der Reflexkörper verwendeten, in der Figur gezeigten Teilchen 1 im Behälter 5 bereits mit einem Haftvermittler behandelt worden.

## Patentansprüche

1. Verfahren zur Herstellung von Reflexkörpern, die dazu bestimmt sind, auf Horizontalmarkierungen von Verkehrsflächen oder Verkehrsleitflächen aufgebracht zu werden, unter Verwendung von Reflexperlen mit hohem Brechungsindex über 1,90, **dadurch gekennzeichnet, dass** ein Granulat aus harten Teilchen(1), die einen Durchmesser bzw. eine Maximalabmessung im Bereich 0,5 bis 3 mm haben, in der Weise behandelt wird, dass diese Teilchen wenigstens näherungsweise auf ihren jeweiligen gesamten Oberflächen mit flüssiger Farbmasse(2) bedeckt werden und dass anschliessend, bevor der Trocknung- und Aushärtungsvorgang der Farbmasse (2) erfolgt, auf diese Teilchenoberflächen Reflexperlen(8) des erwähnten Typs, die wesentlich kleiner sind als die erwähnten Teilchen, aufgebracht werden, woraufhin man die jeweiligen, mit Farbmasse (2) und Reflexperlen (3) versehenen Reflexkörper trocknen oder aushärten lässt, wobei man die erwähnten Teilchen(1) aus einem Behälter(5) fallen lässt und sie während des Falles zunächst mit der Farbmasse (2) und danach, ebenfalls während des Falles, mit den erwähnten Reflexperlen (3) besprüht.

2. verfahren nach Anspruch 1, **dadurch gekennzeichnet, dass** Reflexperlen mit Durchmessern im Bereich von 60 bis 150 µm, vorzugsweise 80 bis 100 µm, verwendet werden.

3. Verfahren nach einem der vorangehenden Ansprüche, **dadurch gekennzeichnet, dass** die Farbmasse jeweils mit einer Schichtdicke im Bereich von 100 bis 200 Mikrometer auf die Teilchen aufgebracht wird.

4. Verfahren nach einem der vorangehenden Ansprüche, **dadurch gekennzeichnet, dass** die erwähnten Teilchen und/oder die Reflexperlen zuvor mit einem Haftvermittler behandelt werden.

5. Verfahren nach einem der vorangehenden Ansprüche, **dadurch gekennzeichnet, dass** eine weisse oder eine andersfarbige Farbmasse, vorzugsweise eine schnell trocknende Farbmasse, verwendet wird.

6. Verfahren nach einem der vorangehenden Ansprüche, **dadurch gekennzeichnet, dass** als Farbmasse eine Acrylfarbe verwendet wird.

7. Verfahren nach einem der vorangehenden Ansprüche, **dadurch gekennzeichnet, dass** ein Granulat verwendet wird, das teilweise oder vollständig aus Glasperlen besteht.

8. Verfahren nach einem der vorangehenden Ansprüche, **dadurch gekennzeichnet, dass** ein Granulat verwendet wird, das wenigstens teilweise Mineralstoffe wie Quarz, Bruchglas, Kies, Splitt oder dergleichen enthält.

9. Vorrichtung zur Durchführung des Verfahrens nach Anspruch 1, **dadurch gekennzeichnet, dass** sie einen Behälter (5) zur Aufnahme der erwähnten Teilchen (1), darunter um die Fallstrecke dieser Teilchen (1) verteilt angeordnete, auf die Fallstrecke gerichtete Farbspritzpistolen (6), darunter um die Fallstrecke der Teilchen (1) verteilt angeordnete, auf die Fallstrecke gerichtete Perlpistolen (7), und darunter eine Auffangwanne (8) für die Reflexkörper, sowie gegebenenfalls Mittel zum Trocknen, insbesondere zur Ultravioletttrocknung, aufweist.

## Claims

1. Method for producing reflective bodies, which are intended to be applied on horizontal markings of traffic surfaces and of traffic guiding surfaces, by using reflecting beads with a high refractive index over 1,90, **characterised by** the fact that a granulate of hard particles (1), which have a diameter respectively a maximum dimension within the range of 0,5 to 3 mm, is treated in such a manner that these particles are covered at least approximately on their respective entire surfaces with liquid colour mass (2) and that afterwards, before the drying and hardening process of the colour mass (2) takes place, reflecting beads (3) of the mentioned type, which are substantially smaller than the mentioned particles, are applied on these particle surfaces, whereupon one lets dry or harden the respective reflex bodies provided with colour mass (2) and reflecting beads (8), such that one lets fall the mentioned particles (1) from a container (5) and sprays on these, during the falling, first the colour mass (2) and then, likewise during the falling, the mentioned reflecting beads (3).

2. Method according to claim 1, **characterised by** the fact that reflecting beads with diameters within the range of 60 to 150 µm, preferably of 80 to 100 µm, are used.

3. Method according to one of the preceding claims, **characterised by** the fact that the colour mass is applied on the particles in each case with a layer thickness within the range of 100 to 200 micrometers.

4. Method according to one of the preceding claims, **characterised by** the fact that the mentioned particles and/or the reflecting beads are treated beforehand with an adhesion means.

5. Method according to one of the preceding claims, **characterised by** the fact that a colour mass of white or of another colour, preferably a fast drying colour mass, is used.

6. Method according to one of the preceding claims, **characterised by** the fact that an acryl colour is used as colour mass.

7. Method according to one of the preceding claims, **characterised by** the fact that a granulate which partially or completely consists of glass beads is used.

8. Method according to one of the preceding claims, **characterised by** the fact that a granulate comprising at least partially minerals such as quartz, broken glass, gravel, stone chips or the like is used.

9. Device for carrying out the method according to claim 1, **characterised by** the fact that it comprises a container (5) for the admission of the mentioned particles (1), beneath it, arranged to be distributed about the falling line of these particles (1), colour spray pistols (6) directed towards the falling line, beneath it, arranged to be distributed about the falling line of the particles (1), bead pistols (7) directed towards the falling line, and, beneath it, a receiving receptacle (8) for the reflective bodies, as well as eventually means for drying, in particular for ultraviolet drying.

## Revendications

1. Procédé de fabrication des corps réfléchissants destinés à être appliqués sur des marquages horizontaux des surfaces de circulation ou des surfaces de guidage de circulation, en utilisant des perles réfléchissantes avec un indice de réfraction élevé de plus de 1,90, **caractérisé par le fait que** qu'un granulat de particules dures (1) qui ont un diamètre respectivement une dimension maximale dans la plage de 0,5 à 3 mm est traité de telle sorte que ces particules soient couvertes au moins approximativement sur leurs surfaces totales respectives avec une masse de couleur (2) liquide et qu'ensuite, avant que le processus de séchage et de durcissement de la masse de couleur (2) ait lieu, des perles réfléchissantes (3) du type mentionné qui sont sensiblement plus petites que les particules mentionnées sont disposées sur ces surfaces des particules, sur quoi on laisse sécher et durcir les corps réfléchissants respectifs pourvus de masse de couleur (2) et de perles réfléchissantes (3), de manière à ce qu'on laisse tomber les particules mentionnés (1) d'un récipient (5) et les arrose d'abord pendant le chute avec la masse de couleur (2) et ensuite, également pendant le chute, avec les perles réfléchissantes (3) mentionnés.

2. Procédé selon la revendication 1, **caractérisé par le fait que** des perles réfléchissantes de diamètres dans la plage de 60 à 150 µm, de préférence de 80 à 100 µm, sont utilisées.

3. Procédé selon l'une des revendications précédentes, **caractérisé par le fait que** la masse de couleur est disposée sur les particules respectivement avec une épaisseur de couche dans la plage de 100 à 200 micromètres.

4. Procédé selon l'une des revendications précédentes, **caractérisé par le fait que** les particules mentionnées et/ou les perles réfléchissantes sont traités auparavant avec un moyen d'adhésion.

5. Procédé selon l'une des revendications précédentes, **caractérisé par le fait qu'**une masse de couleur blanche ou d'une autre couleur est utilisée, de préférence une masse de couleur séchant rapidement.

6. Procédé selon l'une des revendications précédentes, **caractérisé par le fait qu'**une couleur acrylique est utilisée en tant que masse de couleur.

7. Procédé selon l'une des revendications précédentes, **caractérisé par le fait qu'**un granulat qui se compose en partie ou complètement des perles de verre est utilisé.

8. Procédé selon l'une des revendications précédentes, **caractérisé par le fait qu'**un granulat qui contient au moins en partie des minéraux comme du quartz, du verre pilé, du gravier, du gravillon ou tels est utilisé.

9. Dispositif pour la mise en oeuvre du procédé selon la revendication 1, **caractérisé par le fait qu'**elle comprend un récipient (5) pour l'admission des particules mentionnées (1), en dessous, distribué autour du chemin de chute de ces particules (1) et orienté vers le chemin de chute, des pistolets de dispersion de couleur (6), en dessous, distribué autour du chemin de chute des particules (1) et orienté vers le chemin de chute, des pistolets de perles (7), et, en dessous, un bac de réception (8) pour les corps réfléchissants, ainsi qu'éventuellement des moyens pour le séchage, en particulier pour le séchage ultraviolet.
